# EUROPEAN PATENT SPECIFICATION

(11) **EP 3 474 096 B1**
(45) Date of publication and mention of the grant of the patent: **05.05.2021**
(21) Application number: 17197024.7
(22) Date of filing: 18.10.2017
(51) Int. Cl.: G05B 19/042, H02J 13/00

(54) **A CONTROL SYSTEM FOR POWER CONVERSION APPARATUSES**
STEUERUNGSSYSTEM FÜR ENERGIEUMWANDLUNGSVORRICHTUNGEN
SYSTÈME DE COMMANDE POUR APPAREILS DE CONVERSION DE PUISSANCE

(43) Date of publication of application: 24.04.2019
(73) Proprietor: MARICI Holdings The Netherlands B.V., 3068AX Rotterdam (NL)
(72) Inventor: Bistoni, Fabio, I-06132 San Martino in Colle (PG) (IT)
(74) Representative: De Bortoli, Eros

(56) References cited:
- EP-A1- 2 755 334
- WO-A1-2014/102706
- US-A1- 2015 372 539
- US-A1- 2016 360 533

## Description

The present invention relates to the field of the electric power generation plants.

More particularly, the present invention relates to a control system for controlling the power conversion apparatuses of an electric power generation plant.

As is known, electric power generation plants (e.g. photovoltaic plants) include a number (even hundreds or thousands) of power conversion apparatuses (e.g. photovoltaic inverters) operatively associated to corresponding electric power generation apparatuses (e.g. photovoltaic panels or strings).

Such power conversion apparatuses need to be properly controlled to ensure a suitable electric power production.

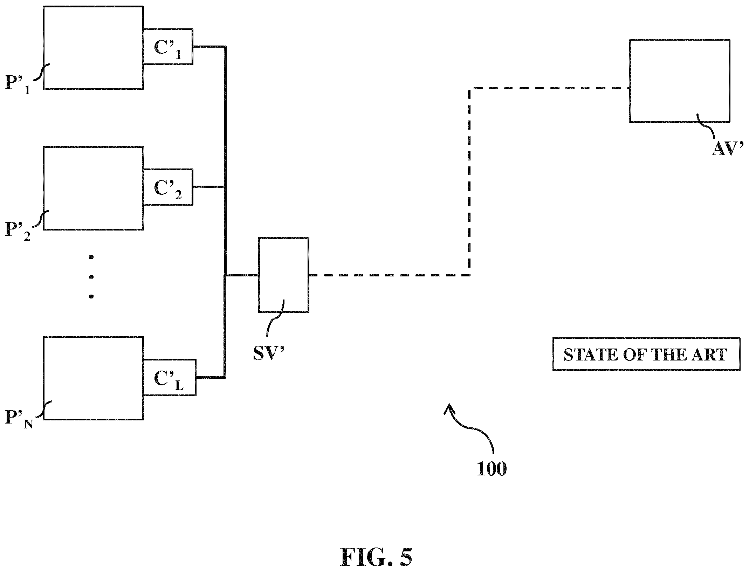

In figure 5, it is shown a known example of a control system 100 for controlling the power conversion apparatuses P'₁, P'₂, P'_{L} of an electric power generation plant.

The control system 100 comprises one or more local controllers C'₁, C'₂, C'_{L}, each constituted by an electronic device operatively associated with a corresponding power conversion apparatus.

Each local controller C'₁, C'₂, C'_{L} is configured to carry out low-level control functionalities, i.e. control functionalities related to the specific operation of the power conversion apparatus P'₁, P'₂, P'_{L} operatively associated thereto.

The control system 100 typically comprises a supervisor SV' configured to carry out high-level control functionalities, i.e. control functionalities related to general supervision of the operation of the power conversion apparatuses P'₁, P'₂, P'_{L}.

As communication between the supervisor SV' and the power conversion apparatuses P'₁, P'₂, P'_{L} needs to occur in real time (e.g. with a response time lower than 5 ms), the supervisor SV' is constituted by an electronic device installed on the field, in practice at the same physical level of the controllers C'₁, C'₂, C'_{L}.

Typically, the supervisor SV' interacts with the controllers C'₁, C'₂, C'_{L} through a local bus and is coupled or includes a Wi-Fi module (not shown) to couple with a wireless communication network using high-level communication protocols (e.g. TCP/IP). In this way, the supervisor SV' may suitably communicate with remote entities, e.g. a remote computerised platform AV' on the Internet.

As is known, the complexity of the high-level control functionalities to be carried out by the above described supervisor is rapidly increasing due to multiple concurrent factors, such as increasing complexity of algorithms dedicated to the implementation of management strategies to operate the power conversion apparatuses, request for increasingly sophisticated user-interface, connectivity and data storage services, incessant changes in regulations, and the like.

In currently available control systems for power conversion apparatuses, the above-described technical issues have been typically faced by increasing the computational power of the above described supervisor. However, it has been seen how such an approach may rapidly bring the installation and maintenance costs of the control system to unstainable levels.

A further possible option might be including a SCADA system dedicated to manage operation of the power conversion plant. However, this would lead to a general increase of the overall commissioning and management costs of the control system as well.

The main aim of the present invention is a control system for controlling the power conversion apparatuses of an electric power generation plant, which allows overcoming the disadvantages described above.

Within this aim, another object of the present invention is to provide a control system, which allows efficiently implementing low-level and high-level control functionalities to manage the operation of the power conversion apparatuses.

Another object of the present invention is to provide a control system having relatively low commissioning and management costs.

Another object of the present invention is to provide a control system, which is relatively easy and inexpensive to implement in practice.

This aim and these objects, together with other objects that will be more apparent from the subsequent description and from the accompanying drawings, are achieved, according to the invention, by a control system, according to the following claim 1 and the related dependent claims.

The control system, according to the present invention, is directed to control one or more power conversion apparatuses on an electric power generation plant.

Preferably, said power conversion apparatuses are photovoltaic inverters and said electric power generation plant is a photovoltaic plant.

In a general definition, the control system, according to the present invention comprises:
- one or more local controllers, each being operatively associated with a corresponding power conversion apparatus and configured to carry out low-level control functionalities related to operation of said corresponding power conversion apparatus;
- a first communication network including a local communication channel operatively coupled to said local controllers;
- a second communication network including a high-speed wireless communication channel and a communication driver operatively coupled to said local communication channel and said high-speed wireless communication channel. Said communication driver is configured to carry out communication interface functionalities between said local communication channel and said high-speed communication channel;
- a remote supervisor operatively coupled to said high-speed communication channel. Said remote supervisor is configured to carry out high-level control functionalities related to operation of said power conversion apparatuses.

According to an aspect of the invention, said second communication network includes one or more data injection nodes operatively coupled to said high-speed communication channel. Each data injection node is configured to add additional information contents to selected data packages travelling along said high-speed communication channel.

Preferably, each data injection node is operatively coupled to a corresponding auxiliary communication channel to receive said additional information contents.

Preferably, each data injection node comprises:
- an interface module configured to interface with said high-speed communication channel;
- a selection module configured to select one or more data packages among the data packages travelling along said high-speed communication channel;
- an adder module configured to add said additional information contents to the selected data packages.

Preferably, one or more of said data injection node are controlled by said remote supervisor. In this case, said selection module is preferably configured to select said data packages based on selection information received from said remote supervisor.

According to an aspect of the invention, said remote supervisor comprises an I/O module configured to interface with said high-speed communication channel and a chain of computing modules arranged as a computing pipeline.

Preferably, said chain of computing modules comprises:
- a first computing module configured to receive data from said I/O module, carry out a corresponding data processing task on received data and transmit processed data to an immediately subsequent computing module;
- one or more intermediate computing modules, each configured to receive data from said I/O module and from an immediately preceding computing module, carry out a corresponding data processing task on received data and transmit processed data to an immediately subsequent computing module;
- a last computing module configured to receive data from said I/O module and from an immediately preceding computing module, carry out a corresponding data processing task on received data and transmit processed data to said I/O module.

Preferably, said I/O module is configured to dispatch, at each data processing time-slot, data received from said high-speed communication channel, which are related to a power conversion apparatus corresponding to said data processing time-slot, to each computing module.

Preferably, each computing module is configured to carry out, at each data processing time-slot, a corresponding data processing task on data received from said I/O module, which are related to a power conversion apparatus corresponding to said data processing time-slot, and on data received from an immediately preceding computing module, if present.

Preferably, said I/O module is configured to transmit, at each data processing time-slot, data received from the last computing module of said chain of computing modules, which are related to a power conversion apparatus corresponding to said data processing time-slot, along said high speed communication channel.

According to an aspect of the invention, said remote supervisor is part of a cloud-computing architecture and is preferably configured to communicate and interact with a data computing platform.

Further characteristics and advantages of the present invention shall emerge more clearly from the description of preferred but not exclusive embodiments illustrated purely by way of example and without limitation in the attached drawings, in which:

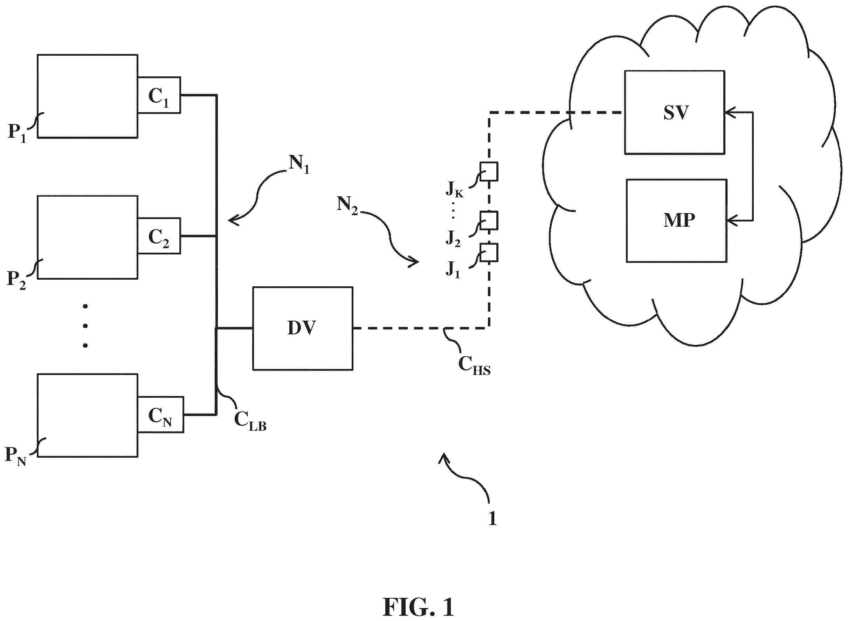

Figure 1 schematically illustrates the control system, according to the invention;

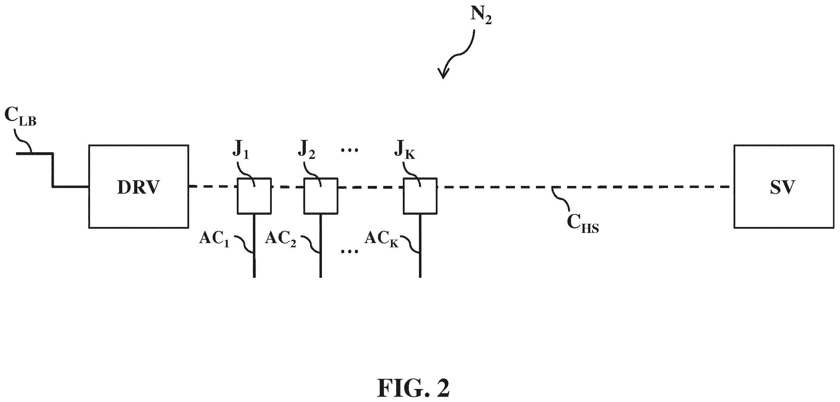

Figures 2-4 schematically illustrate some aspects of the control system of Figure 1;
Figure 5 schematically illustrates a control system of the state of the art.

With reference to the mentioned figures, the present invention relates to a control system 1 for controlling one or more power conversion apparatuses P₁, P₂, P_{N} of a low voltage electric power generation plant.

For the sake of clarity, it is specified that the term "low voltage" refers to operating voltages lower than 1 kV AC and 1.5 kV DC.

In principle, the power conversion apparatuses P₁, P₂, P_{N} may be of any type. The control system 1 is however particularly suitable for controlling the operation of one or more photovoltaic inverters of a photovoltaic plant and will be described with particular reference to this application without intending to limit the scope of the invention.

According to the invention, the control system 1 comprises one or more local controllers C₁, C₂, C_{N}, each of which is operatively associated with a corresponding power conversion apparatus.

Preferably, each local controller C₁, C₂, C_{N} is an electronic device operatively coupled with or installed on-board the power conversion apparatuses P₁, P₂, P_{N} associated thereto and including digital processing resources (e. g. a DSP) capable of executing suitable sets of software instructions stored in a medium to carry out the requested functionalities.

Each local controller C₁, C₂, C_{N} is configured to carry out low-level control functionalities related to the operation of a corresponding power conversion apparatus P₁, P₂, P_{N}.

For the sake of clarity, "low-level control functionalities" are functions strictly related to the operation of each power conversion apparatus P₁, P₂, P_{N} associated to a given local controller C₁, C₂, C_{N}. Low-level control functionalities include, for example, managing the acquisition of values of physical quantities to be controlled for operating the associated power conversion apparatus, carrying out computations related to control loops for operating the associated power conversion apparatus, providing control signals for driving electronic circuits or devices of the associated power conversion apparatus, managing inputs/outputs of the associated power conversion apparatus, managing communication with other controllers or electronic devices at local level, and the like.

According to the invention, the control system 1 comprises a first communication network N₁ including a local communication channel C_{LB} operatively coupled to the local controllers C₁, C₂, C_{N} and preferably configured to implement a field communication protocol, such as CAN, SPI, Fieldbus type or the like.

According to the invention, the control system 1 comprises a second communication network N₂ including a high-speed wireless communication channel C_{HS}.

For the sake of clarity, it is specified that the term "high-speed" refers to data transmission speed values higher than 20Mbps.

Preferably, the high-speed wireless communication channel C_{HS} is a wireless channel of the 4G/Advanced or 5G type and it employs a high-level communication protocol, such as Sunspec, TCP/IP, MODBUS, or another open or proprietary communication protocol.

According to the invention, the control system 1 comprises a communication driver DRV operatively coupled to the local communication channel C_{LB} and to the high-speed wireless communication channel C_{HS}.

Preferably, the communication driver DRV is an electronic device operatively installed on-the field (i.e. at the same physical level of the local controllers C₁, C₂, C_{N}) and including digital processing resources (e. g. a microcontroller or DSP) capable of executing software instructions stored in a medium to carry out the requested functionalities.

The communication driver DRV is configured to receive data packages transmitted by the local controllers C₁, C₂, C_{N} through the local communication channel C_{LB} and transmit said data packages to a remote location through high-speed communication channel C_{HS}.

The communication driver DRV is also configured to receive data packages transmitted from a remote location through the high-speed communication channel C_{H} and transmit said data packages to the local controllers C₁, C₂, C_{N} through the local communication channel C_{LB}.

The functionalities of the communication driver DRV are therefore limited to the implementation of a bidirectional data transmission interface between the local communication channel C_{LB} and the high-speed communication channel C_{HS}.

According to the invention, the control system 1 comprises a remote supervisor SV operatively coupled to the high-speed communication channel C_{HS}.

The supervisor SV is conveniently implemented at a remote level with respect to the physical level of the local controllers C₁, C₂, C_{N} and of the driver DRV.

Preferably, the remote supervisor SV is part of a cloud computing architecture available on the Internet. In this case, the remoted supervisor SV may be conveniently embodied by suitable digital processing resources of said cloud computing architecture, which are capable to execute suitable sets of software instructions stored in a medium to implement the requested functionalities.

Alternatively, the remote supervisor SV may be a "stand alone" computerized unit (or set of interacting computerized units) connectable to the Internet and including digital processing resources capable to execute suitable sets of software instructions stored in a medium to implement the requested functionalities.

The remote supervisor SV is configured to carry out high-level control functionalities related to operation of the power conversion apparatuses P₁, P₂, P_{N}.

For the sake of clarity, "high-level control functionalities" are functions related to the general supervision of the operation of the power conversion apparatuses P₁, P₂, P_{N}.

High-level control functionalities include, for example, setting or implementing management strategies to operate the power conversion apparatuses, providing logging and alarm management services for the power conversion apparatuses, providing software updating and configuration services for the power conversion apparatuses, providing man-machine-interface services for the power conversion apparatuses, managing communication of the power conversion apparatuses with remote entities, and the like.

The arrangement of the supervisor SV at a remote level with respect to the physical level of the the local controllers C₁, C₂, C_{N}, preferably at a cloud-computing level, provides relevant advantages.

The supervisor SV may, in fact, be easily provided, at reasonable costs, with sufficiently powerful computational resources to manage the increasing complexity of the high-level control functionalities to be carried out.

Differently from currently available solutions of the state of the art, the supervisor SV can easily provide additional sophisticated control functionalities, such as image recognition, augmented reality, video on demand functionalities, which greatly increase the quality of services provided the control system.

The implementation of the supervisor SV at a cloud level allows to remarkably increase the quantity and quality of stored data related to the operation of the of the power conversion apparatuses P₁, P₂, P_{N}. Additionally, software updating and/or configuring interventions may be carried out in very short times and with greatly reduced costs.

According to preferred embodiments of the invention, the second communication N₂ includes one or more data injection nodes J₁, J₂, J_{K} operatively coupled with the high-speed communication channel C_{HS}.

Preferably, each data injection node J₁, J₂, J_{K} is an electronic device operatively coupled with the high-speed communication channel C_{HS} and including digital processing resources (e.g. a DSP or microcontroller) capable of executing suitable software instructions stored in a medium to carry out the requested functionalities.

Preferably, each data injection node J₁, J₂, J_{K} is configured to add additional information contents AIE to selected data packages DP travelling along the high-speed communication channel C_{HS}.

Data packages processed by the data injection node J₁, J₂, J_{K} may be upload data packages, which travel from the communication driver DRV (more precisely the local controllers C₁, C₂, C_{N}) to the remote supervisor SV, or download data packages, which travel from the remote supervisor SV to the communication driver DRV (more precisely the local controllers C₁, C₂, C_{N}).

Preferably, each data injection node J₁, J₂, J_{K} is operatively coupled to a corresponding auxiliary communication channel AC₁, AC₂, AC_{K} to receive the additional information contents AIE to be added to selected data packages DP.

Said auxiliary communication channels may be configured to implement field communication protocols, such as CAN, SPI, Fieldbus type or the like, or high-level communication protocols, such as Sunspec, TCP/IP, MODBUS, according to the needs.

The additional information contents AIE provided by each data injection node J₁, J₂, J_{K} may consist of any information to be processed by the local controllers C₁, C₂, C_{N} or of the supervisor SV to improve the overall performances of the control system. As an example, they may include weather data or other environmental data provided by a local monitoring station, or commands provided by a user interface device.

The additional information contents AIE may be transmitted to each data injection node J₁, J₂, J_{K} by any electronic device (not shown) operatively coupled to the corresponding auxiliary communication channel AC₁, AC₂, AC_{K}.

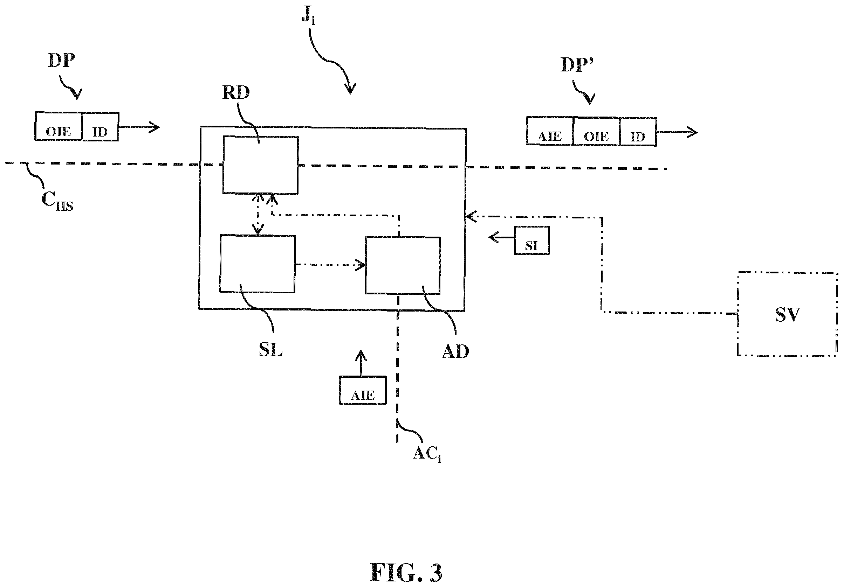

Preferably, each data injection node J₁, J₂, J_{K} comprises an interface module RD configured to interface with the high-speed communication channel C_{HS}, a selection module SL configured to select one or more data packages among the data packages travelling along the high-speed communication channel C_{HS} and an adder module AD configured to add additional information contents AIE to the selected data packages (figure 3).

Conveniently, the processing modules RD, SL, AD are embodied by suitable digital processing resources of said data injection node, which are capable to execute suitable sets of software instructions stored in a medium to implement the requested functionalities.

The operation of a generic data injection node Jᵢ is now briefly described with particular reference to data packages DP transmitted to the remote supervisor SV by the local controllers C₁, C₂, C_{N} (figure 3). Obviously, a data injection node Jᵢ may operate similarly for processing data packages travelling transmitted to the local controllers C₁, C₂, C_{N} by the remote supervisor SV.

When the interface module RD receives a data package DP travelling along the high-speed communication channel C_{HS}, it transmits such a data package to the selection module SL. This latter checks an identification content ID of the data package DP, e.g. by comparing said identification content with given selection information SI.

If the identification content ID is not recognised, the selection module SL transmits the received data package DP back to the interface module RD, which in turn transmits said data package along the high-speed communication channel C_{HS}.

If the identification content ID is recognised, the selection module SL transmits the data package DP to the adder module AD, which adds an additional information content AIE.

In this way, an enriched data package DP' is obtained, which includes the identification content ID and an information content formed by the original information content OIE of the data package DP as received and by the additional information content AIE.

The adder module AD then transmits the enriched data package DP' so obtained to the interface module RD, which in turn transmits said enriched data package along the high-speed communication channel C_{HS}.

The arrangement of the above described data injection nodes J₁, J₂, J_{K} provides relevant advantages, such as the possibility of enriching information travelling along the high-speed communication channel C_{HS} with high quality additional information in a simple way and without any actual burden for the remote supervisor SV and, more relevantly, the local controllers C₁, C₂, C_{N}.

Data injection nodes J₁, J₂, J_{K} allow easily interfacing with a number of remote entities to improve the quality and quantity of information travelling along the high-speed communication channel C_{HS}, such as remote sensors to acquire additional detection data of interest or remote computerized networks to acquire suitably processed data of interest. Where the conversion apparatuses are photovoltaic inverters, data injection nodes J₁, J₂, J_{K} allow easily interfacing with grid operators and integrating the control system 1 with billing systems.

According to possible embodiments of the invention, one or more data injection nodes J₁, J₂, J_{K} are controlled by the remote supervisor SV, as shown in figure 3.

In this case, the remote supervisor SV preferably provides each generic controlled data injection node Jᵢ with the selection information SI to be used by the corresponding selection module SL for selecting the data packages to be enriched with an additional information content AIE.

The above-described solution is particularly useful for suitably enriching data packages DP transmitted to the remote supervisor SV by the local controllers C₁, C₂, C_{N}. The remote supervisor SV can, in fact, command any controlled data injection node Jᵢ on how properly selecting data packages DP of interest to enrich with an additional information content AIE.

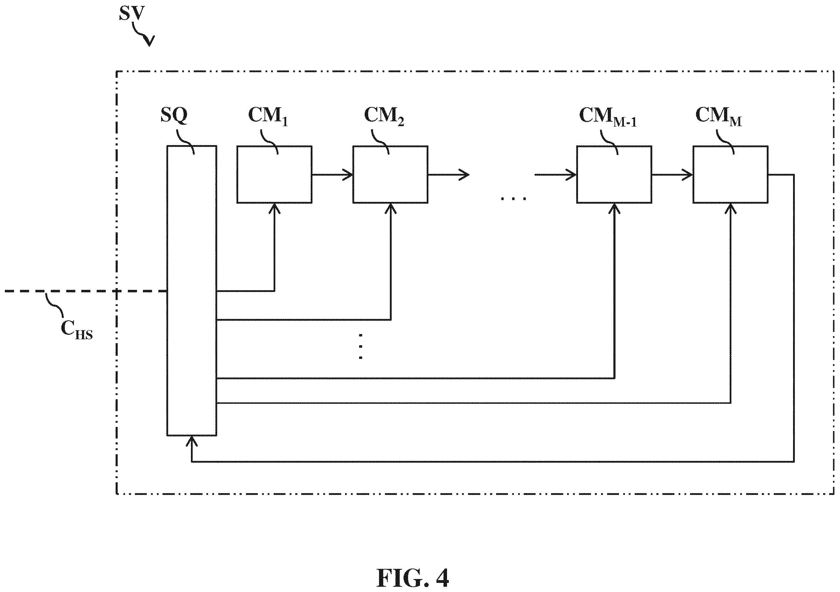

According to an aspect of the invention (figure 4), the remote supervisor SV comprises an I/O module SQ configured to interface with the high-speed communication channel C_{HS} and a chain of computing modules CM₁, CM₂, CM_{M-1}, CM_{M}, which is conveniently structured as a computing pipeline capable of processing information related to different power conversion apparatus P₁, P₂, P_{N} at different data processing time-slots.

Preferably, said chain of computing modules comprises:
- a first computing module CM₁ configured to receive data from the I/O module SQ, carry out a specific data processing task on the received data and transmit processed data to an immediately subsequent computing module CM₂;
- one or more intermediate computing modules CM₂, CM_{M-1}. Each intermediate computing module is configured to receive data from the I/O module SQ and from an immediately preceding computing module, carry out a specific data processing task on the received data and transmit data to an immediately subsequent computing module;
- a last computing module CM_{M} configured to receive data from the I/O module SQ and from an immediately preceding computing module CM_{M-1}, carry out a specific data processing task on the received data and transmit data to the I/O module.

For the sake of clarity, it is specified that, in the above mentioned chain of computing modules, an "immediately preceding computing module" of a given computing module is the computing module having its output in communication with the input of said given computing module whereas an "immediately subsequent computing module" of a given computing module is the computing module having its input in communication with the output of said given computing module.

Obviously, the above mentioned first computing module CM₁ has an immediately subsequent computing module CM₂ only whereas the above mentioned last computing module CM_{M} has an immediately preceding computing module CM_{M-1} only.

The operation of supervisor SV is now briefly described.

At each data processing time-slot:
- the I/O module SQ provides each computing module CM₁, CM₂, CM_{M-1}, CM_{M} with data related to a different power conversion apparatus P₁, P₂, P_{N}, which corresponds to said data processing time-slot;
- each computing module CM₁, CM₂, CM_{M-1}, CM_{M} carries out a specific data processing task on the data received from the I/O module SQ, which are related to a power conversion apparatus P₁, P₂, P_{N} corresponding to said data processing time-slot, and on the data received from the immediately preceding computing module (if present);
- the I/O module SQ transmits data received from the last computing module CM_{M}, which are related to a power conversion apparatus P₁, P₂, P_{N} corresponding to said data processing time-slot, along the high-speed communication channel C_{HS}.

It is therefore evident that the supervisor SV can process data related to each power conversion apparatus P₁, P₂, P_{N} in at most M processing time-slots, where M is the number of computing modules of the remote supervisor SV and it can made available said data on the high-speed communication channel C_{HS} in at most M+N processing time-slots, where N is the overall number of the controlled power conversion apparatus P₁, P₂, P_{N}.

Conveniently, the modules SQ, CM₁, CM₂, CM_{M-1}, CM_{M} are embodied by suitable digital processing resources of the remote supervisor SV, which are capable to execute suitable sets of software instructions stored in a medium to implement the requested functionalities.

The arrangement of the above described computing architecture for the remote supervisor SV thus provides relevant advantages in terms of calculation efficiency and speed.

According to possible embodiments of the invention, the remote supervisor SV is configured to communicate and interact with a further computing platform AV, which may be part of a cloud computing architecture available on the Internet.

Conveniently, the computing platform AV may be configured to carry out massive data and/or statistical analysis on information related to the operation of the power conversion apparatuses P₁, P₂, P_{N}.

The control system 1, according to the invention, provides relevant advantages with respect to known control systems for controlling power conversion apparatuses.

The control system, according to the present invention, allows efficiently implementing low-level and high-level control functionalities to manage the operation of the power conversion apparatuses.

The supervisor SV implemented at a remote level (preferably at cloud computing level) with respect to the local controllers C₁, C₂, C_{N} ensures powerful and flexible computing resources to carry out sophisticated high-level control functionalities.

The supervisor SV conveniently forms a single supervising entity of the overall distributed control system 1. This allows achieving a number of advantages, such as easily changing "on the fly" the computing algorithms to be used to carry out the high-level control functionalities, carrying out almost instantaneous software update processes, implementing a centralized control of identification data, carrying out centralized and big data analysis processes.

On the other hand, the adoption of a high-speed communication channel C_{HS} ensures a real-time interaction between the remote supervisor SV and the local controllers C₁, C₂, C_{N}, which allows efficiently operating these latter as the supervisor SV and the local controllers were at a same physical level.

The control system, according to the present invention, is characterised by relatively low commissioning and management costs. The implementation of the supervisor SV at remote level, in fact, allows remarkably reducing the on-the-field installation costs and greatly simplify possible software configuration and update processes

The control system, according to the invention, is relatively simple and cheap to implement in practice, and is thus characterised by relatively low industrial costs.

## Claims

1. A control system (1) for controlling one or more power conversion apparatuses (P₁, P₂, P_{N}), said control system comprising:
- one or more local controllers (C₁, C₂, C_{N}), each local controller being operatively associated with a corresponding power conversion apparatus and configured to carry out low-level control functionalities related to operation of said corresponding power conversion apparatus;
- a first communication network (N₁) including a local communication channel (C_{LB}) operatively coupled to said local controllers;
- a second communication network (N₂) including a high-speed wireless communication channel (C_{HS}) and a communication driver (DRV) operatively coupled to said local communication channel and said high-speed wireless communication channel, said communication driver being configured to carry out communication interface functionalities between said local communication channel and said high-speed communication channel;
- a remote supervisor (SV) operatively coupled to said high-speed communication channel, said remote supervisor being configured to carry out high-level control functionalities related to operation of said power conversion apparatuses;
**characterised in that** said second communication network (N₂) includes one or more data injection nodes (J₁, J₂, J_{K}) operatively coupled to said high-speed communication channel (C_{HS}), each data injection node being configured to add additional information contents (AIE) to selected data packages (DP) travelling along said high-speed communication channel,
wherein each data injection node (J₁, J₂, J_{K}) is operatively coupled to a corresponding auxiliary communication channel (AC₁, AC₂, AC_{K}) to receive said additional information contents (AIE).

2. A control system, according to claim 1, **characterised in that** each data injection node (J₁, J₂, J_{K}) comprises:
- an interface module (RD) configured to interface with said high-speed communication channel (C_{HS});
- a selection module (SL) configured to select one or more data packages among the data packages travelling along said high-speed communication channel;
- an adder module (AD) configured to add said additional information contents (AIE) to the selected data packages.

3. A control system, according to one of the previous claims, **characterised in that** one or more of said data injection node (J₁, J₂, J_{K}) are controlled by said remote supervisor (SV).

4. A control system, according to claims 2 and 3, **characterised in that** said selection module (SL) is configured to select said data packages based on selection information (SI) received from said remote supervisor (SV).

5. A control system, according to one or more of the previous claims, **characterised in that** said remote supervisor (SV) comprises an I/O module (SQ) configured to interface with said high-speed communication channel (C_{HS}) and a chain of computing modules (CM₁, CM₂, CM_{M-1}, CM_{M}) including:
- a first computing module (CM₁) configured to receive data from said I/O module (SQ), carry out a corresponding data processing task on received data and transmit processed data to an immediately subsequent computing module (CM₂);
- one or more intermediate computing modules (CM₂, CM_{M-1}) each configured to receive data from said I/O module (SQ) and from an immediately preceding computing module (CM₁), carry out a corresponding data processing task on received data and transmit processed data to an immediately subsequent computing module;
- a last computing module (CM_{M}) configured to receive data from said I/O module (SQ) and from an immediately preceding computing module, carry out a corresponding data processing task on received data and transmit processed data to said I/O module.

6. A control system, according to one claim 5, **characterised in that** said I/O module is configured to dispatch, at each data processing time-slot, data received from said high-speed communication channel (C_{HS}), which are related to a power conversion apparatus (P₁,P₂, P_{N}) corresponding to said data processing time-slot, to each computing module (CM₁, CM₂, CM_{M-1}, CM_{M}).

7. A control system, according to one or more of the claims from 5 to 6, **characterised in that** each computing module (CM₁, CM₂, CM_{M-1}, CM_{M}) is configured to carry out, at each data processing time-slot, a corresponding data processing task on data received from the I/O module SQ, which are related to a power conversion apparatus P₁, P₂, P_{N} corresponding to said data processing time-slot, and on data received from an immediately preceding computing module, if present.

8. A control system, according to one or more of the claims from 5 to 7, **characterised in that** said I/O module is configured to transmit, at each data processing time-slot, data received from said last computing module (CM_{M}), which are related to a power conversion apparatus (P₁,P₂, P_{N}) corresponding to said data processing time-slot, along said high-speed communication channel (C_{HS}).

9. A control system, according to one or more of the previous claims, **characterised in that** said remote supervisor (SV) is part of a cloud-computing architecture.

10. A control system, according to one or more of the previous claims, **characterised in that** said remote supervisor (SV) is configured to communicate and interact with a data computing platform (AV).

11. A control system, according to one or more of the previous claims, **characterised in that** said power conversion apparatuses (P₁,P₂, P_{N}) are photovoltaic inverters.

## Patentansprüche

1. Steuersystem (1) zum Steuern einer oder mehrerer Leistungsumsetzungsvorrichtungen (P₁, P₂, P_{N}), wobei das Steuersystem Folgendes umfasst:
- eine oder mehrere lokale Steuereinheiten (C₁, C₂, C_{N}), wobei jede lokale Steuereinheit einer entsprechenden Leistungsumsetzungsvorrichtung betriebstechnisch zugeordnet und konfiguriert ist, Steuerfunktionalitäten einer niedrigen Ebene bezüglich des Betriebs der entsprechenden Leistungsumsetzungsvorrichtung auszuführen;
- ein erstes Kommunikationsnetz (N₁), das einen lokalen Kommunikationskanal (C_{LB}) enthält, der mit den lokalen Steuereinheiten betriebstechnisch gekoppelt ist;
- ein zweites Kommunikationsnetz (N2), das einen Hochgeschwindigkeits-Drahtloskommunikationskanal (C_{HS}) und eine Kommunikationsansteuereinrichtung (DRV), die mit dem lokalen Kommunikationskanal und dem Hochgeschwindigkeits-Drahtloskommunikationskanal betriebstechnisch gekoppelt ist, enthält, wobei die Kommunikationsansteuereinrichtung konfiguriert ist, Kommunikationsschnittstellenfunktionalitäten zwischen dem lokalen Kommunikationskanal und dem Hochgeschwindigkeitskommunikationskanal auszuführen;
- eine entfernte Hauptsteuereinheit (SV), die mit dem Hochgeschwindigkeitskommunikationskanal betriebstechnisch gekoppelt ist, wobei die entfernte Hauptsteuereinheit konfiguriert ist, Steuerfunktionalitäten einer hohen Ebene bezüglich des Betriebs der Leistungsumsetzungsvorrichtungen auszuführen;
**dadurch gekennzeichnet, dass** das zweite Kommunikationsnetz (N₂) einen oder mehrere Dateneinspeisungsknoten (J₁, J₂, J_{K}) enthält, die mit dem Hochgeschwindigkeitskommunikationskanal (C_{HS}) betriebstechnisch gekoppelt sind, wobei jeder Dateneinspeisungsknoten konfiguriert ist, zu ausgewählten Datenpaketen (DP), die sich auf dem Hochgeschwindigkeitskommunikationskanal bewegen, zusätzliche Informationsinhalte (AIE) hinzuzufügen,
wobei jeder Dateneinspeisungsknoten (J₁, J₂, J_{K}) mit einem entsprechenden Hilfskommunikationskanal (AC₁, AC₂, AC_{K}) betriebstechnisch gekoppelt ist, um die zusätzlichen Informationsinhalte (AIE) zu empfangen.

2. Steuersystem nach Anspruch 1, **dadurch gekennzeichnet, dass** jeder Dateneinspeisungsknoten (J₁, J₂, J_{K}) Folgendes umfasst:
- ein Schnittstellenmodul (RD), das konfiguriert ist, mit dem Hochgeschwindigkeitskommunikationskanal (C_{HS}) zu koppeln;
- ein Auswahlmodul (SL), das konfiguriert ist, ein oder mehrere Datenpakete aus den Datenpaketen, die sich auf dem Hochgeschwindigkeitskommunikationskanal bewegen, auszuwählen;
- ein Hinzufügemodul (AD), das konfiguriert ist, die zusätzlichen Informationsinhalte (AIE) zu den ausgewählten Datenpaketen hinzuzufügen.

3. Steuersystem nach einem der vorhergehenden Ansprüche, **dadurch gekennzeichnet, dass** einer oder mehrere der Dateneinspeisungsknoten (J₁, J₂, J_{K}) durch die entfernte Hauptsteuereinheit (SV) gesteuert werden.

4. Steuersystem nach den Ansprüchen 2 und 3, **dadurch gekennzeichnet, dass** das Auswahlmodul (SL) konfiguriert ist, die Datenpakete auf der Grundlage von Auswahlinformationen (SI), die von der entfernten Hauptsteuereinheit (SV) empfangen werden, auszuwählen.

5. Steuersystem nach einem oder mehreren der vorhergehenden Ansprüche, **dadurch gekennzeichnet, dass** die entfernte Hauptsteuereinheit (SV) ein I/O-Modul (SQ) umfasst, das konfiguriert ist, mit dem Hochgeschwindigkeitskommunikationskanal (C_{HS}) und einer Kette von Rechenmodulen (CM₁, CM₂, CM_{M-1}, CM_{M}) zu koppeln, die Folgendes enthalten:
- ein erstes Rechenmodul (CM₁), das konfiguriert ist, von dem I/O-Modul (SQ) Daten zu empfangen, eine entsprechende Datenverarbeitungsaufgabe auf den empfangenen Daten auszuführen und die verarbeiteten Daten an ein unmittelbar nachfolgendes Rechenmodul (CM₂) zu übertragen;
- ein oder mehrere Zwischenrechenmodule (CM₂, CM_{M-1}), die jeweils konfiguriert sind, von dem I/O-Modul (SQ) und von einem unmittelbar vorhergehenden Rechenmodul (CM₁) Daten zu empfangen, eine entsprechende Datenverarbeitungsaufgabe auf den empfangenen Daten auszuführen und die verarbeiteten Daten an ein unmittelbar nachfolgendes Rechenmodul zu übertragen;
- ein letztes Rechenmodul (CM_{M}), das konfiguriert ist, von dem I/O-Modul (SQ) und von einem unmittelbar vorhergehenden Rechenmodul Daten zu empfangen, eine entsprechende Datenverarbeitungsaufgabe auf den empfangenen Daten auszuführen und die verarbeiteten Daten an das I/O-Modul zu übertragen.

6. Steuersystem nach Anspruch 5, **dadurch gekennzeichnet, dass** das I/O-Modul konfiguriert ist, in jedem Datenverarbeitungszeitschlitz Daten, die vom Hochgeschwindigkeitskommunikationskanal (C_{HS}) empfangen werden, die sich auf eine dem Datenverarbeitungszeitschlitz entsprechende Leistungsumsetzungsvorrichtung (P₁, P₂, P_{N}) beziehen, an jedes Rechenmodul (CM₁, CM₂, CM_{M-1}, CM_{M}) abzugeben.

7. Steuersystem nach einem oder mehreren der Ansprüche von 5 bis 6, **dadurch gekennzeichnet, dass** jedes Rechenmodul (CM₁, CM₂, CM_{M-1}, CM_{M}) konfiguriert ist, in jedem Datenverarbeitungszeitschlitz eine entsprechende Datenverarbeitungsaufgabe auf Daten, die vom I/O-Modul (SQ) empfangen werden, die sich auf eine dem Datenverarbeitungszeitschlitz entsprechende Leistungsumsetzungsvorrichtung (P₁, P₂, P_{N}) beziehen, und auf Daten, die von einem unmittelbar vorhergehenden Rechenmodul empfangen werden, wenn vorhanden, auszuführen.

8. Steuersystem nach einem oder mehreren der Ansprüche 5 bis 7, **dadurch gekennzeichnet, dass** das I/O-Modul konfiguriert ist, in jedem Datenverarbeitungszeitschlitz Daten, die vom letzten Rechenmodul (CM_{M}) empfangen werden, die sich auf eine dem Datenverarbeitungszeitschlitz entsprechende Leistungsumsetzungsvorrichtung (P₁, P₂, P_{N}) beziehen, über den Hochgeschwindigkeitskommunikationskanal (C_{HS}) zu übertragen.

9. Steuersystem nach einem oder mehreren der vorhergehenden Ansprüche, **dadurch gekennzeichnet, dass** die entfernte Hauptsteuereinheit (SV) Teil einer Cloud-Rechenarchitektur ist.

10. Steuersystem nach einem oder mehreren der vorhergehenden Ansprüche, **dadurch gekennzeichnet, dass** die entfernte Hauptsteuereinheit (SV) konfiguriert ist, mit einer Datenrechenplattform (AV) zu kommunizieren und zu wechselwirken.

11. Steuersystem nach einem oder mehreren der vorhergehenden Ansprüche, **dadurch gekennzeichnet, dass** die Leistungsumsetzungsvorrichtungen (P₁, P₂, P_{N}) Photovoltaik-Wechselrichter sind.

## Revendications

1. Système de commande (1) pour commander un ou plusieurs appareils de conversion de puissance (P₁, P₂, P_{N}), ledit système de commande comprenant :
- un ou plusieurs contrôleurs locaux (C₁, C₂, C_{N}), chaque contrôleur local étant associé opérationnellement à un appareil de conversion de puissance correspondant et configuré pour réaliser des fonctions de commande de bas niveau concernant le fonctionnement dudit appareil de conversion de puissance correspondant ;
- un premier réseau de communication (N₁) comportant un canal de communication local (C_{LB}) couplé opérationnellement auxdits contrôleurs locaux ;
- un second réseau de communication (N₂) comportant un canal de communication sans fil à haut débit (C_{HS}) et un pilote de communication (DRV) couplé opérationnellement audit canal de communication local et audit canal de communication sans fil à haut débit, ledit pilote de communication étant configuré pour réaliser des fonctions d'interface de communication entre ledit canal de communication local et ledit canal de communication à haut débit ;
- un superviseur à distance (SV) couplé opérationnellement audit canal de communication à haut débit, ledit superviseur à distance étant configuré pour réaliser des fonctions de commande de haut niveau relatives au fonctionnement desdits appareils de conversion de puissance ;
**caractérisé en ce que** ledit second réseau de communication (N₂) comporte un ou plusieurs nœuds d'injection de données (J₁, J₂, J_{K}) couplés opérationnellement audit canal de communication à haut débit (C_{HS}), chaque nœud d'injection de données étant configuré pour ajouter des contenus d'informations supplémentaires (AIE) à des paquets de données (DP) sélectionnés acheminés sur ledit canal de communication à haut débit,
dans lequel chaque nœud d'injection de données (J₁, J₂, J_{K}) est couplé opérationnellement à un canal de communication auxiliaire correspondant (AC₁, AC₂, AC_{K}) pour recevoir lesdits contenus d'informations supplémentaires (AIE).

2. Système de commande, selon la revendication 1, **caractérisé en ce que** chaque nœud d'injection de données (J₁, J₂, J_{K}) comprend :
- un module d'interface (RD) configuré pour s'interfacer avec ledit canal de communication à haut débit (C_{HS}) ;
- un module de sélection (SL) configuré pour sélectionner un ou plusieurs paquets de données parmi les paquets de données acheminés sur ledit canal de communication à haut débit ;
- un module additionneur (AD) configuré pour ajouter lesdits contenus d'informations supplémentaires (AIE) aux paquets de données sélectionnés.

3. Système de commande, selon l'une des revendications précédentes, **caractérisé en ce qu'**un ou plusieurs dudit nœud d'injection de données (J₁, J₂, J_{K}) sont commandés par ledit superviseur à distance (SV).

4. Système de commande, selon les revendications 2 et 3, **caractérisé en ce que** ledit module de sélection (SL) est configuré pour sélectionner lesdits paquets de données en fonction d'informations de sélection (SI) reçues à partir dudit superviseur à distance (SV).

5. Système de commande, selon une ou plusieurs des revendications précédentes, **caractérisé en ce que** ledit superviseur à distance (SV) comprend un module d'E/S (SQ) configuré pour s'interfacer avec ledit canal de communication à haut débit (C_{HS}) et une chaîne de modules de calcul (CM₁, CM₂, CM_{M-1}, CM_{M}) comportant :
- un premier module de calcul (CM₁) configuré pour recevoir des données à partir dudit module d'E/S (SQ), réaliser une tâche de traitement de données correspondante sur des données reçues et transmettre des données traitées à un module de calcul immédiatement suivant (CM₂) ;
- un ou plusieurs modules de calcul intermédiaires (CM₂, CM_{M-1}) configurés chacun pour recevoir des données à partir dudit module d'E/S (SQ) et à partir d'un module de calcul immédiatement précédent (CM₁), réaliser une tâche de traitement de données correspondante sur des données reçues et transmettre des données traitées à un module de calcul immédiatement suivant ;
- un module de calcul final (CM_{M}) configuré pour recevoir des données à partir dudit module d'E/S (SQ) et à partir d'un module de calcul immédiatement précédent, réaliser une tâche de traitement de données correspondante sur des données reçues et transmettre des données traitées audit module d'E/S.

6. Système de commande, selon la revendication 5, **caractérisé en ce que** ledit module d'E/S est configuré pour expédier, à chaque tranche de temps de traitement de données, des données reçues à partir dudit canal de communication à haut débit (C_{HS}), lesquelles se rapportent à un appareil de conversion de puissance (P₁, P₂, P_{N}) correspondant à ladite tranche de temps de traitement de données, à chaque module de calcul (CM₁, CM₂, CM_{M-1}, CM_{M}).

7. Système de commande, selon une ou plusieurs des revendications 5 à 6, **caractérisé en ce que** chaque module de calcul (CM₁, CM₂, CM_{M-1}, CM_{M}) est configuré pour réaliser, à chaque tranche de temps de traitement de données, une tâche de traitement de données correspondante sur des données reçues à partir du module d'E/S SQ, lesquelles se rapportent à un appareil de conversion de puissance (P₁, P₂, P_{N}) correspondant à ladite tranche de temps de traitement de données, et sur des données reçues à partir d'un module de calcul immédiatement précédent, le cas échéant.

8. Système de commande, selon une ou plusieurs des revendications 5 à 7, **caractérisé en ce que** ledit module d'E/S est configuré pour transmettre, à chaque tranche de temps de traitement de données, des données reçues à partir dudit module de calcul final (CM_{M}), lesquelles se rapportent à un appareil de conversion de puissance (P₁, P₂, P_{N}) correspondant à ladite tranche de temps de traitement de données, sur ledit canal de communication à haut débit (C_{HS}).

9. Système de commande, selon une ou plusieurs des revendications précédentes, **caractérisé en ce que** ledit superviseur à distance (SV) fait partie d'une architecture informatique en nuage.

10. Système de commande, selon une ou plusieurs des revendications précédentes, **caractérisé en ce que** ledit superviseur à distance (SV) est configuré pour communiquer et interfonctionner avec une plate-forme informatique de données (AV).

11. Système de commande, selon une ou plusieurs des revendications précédentes, **caractérisé en ce que** lesdits appareils de conversion de puissance (P₁, P₂, P_{N}) sont des onduleurs photovoltaïques.
